# EUROPÄISCHE PATENTSCHRIFT

(11) **EP 3 337 962 B1**
(45) Veröffentlichungstag und Bekanntmachung des Hinweises auf die Patenterteilung: **21.08.2019**
(21) Anmeldenummer: 16729935.3
(22) Anmeldetag: 20.06.2016
(51) Int. Cl.: F01N 3/025, F01N 9/00, F02M 37/00

(54) **KRAFTSTOFFVERSORGUNGSEINRICHTUNG ZUR MOTOREINSPRITZUNG UND ZUR ABGASNACHBEHANDLUNG**
FUEL SUPPLY DEVICE FOR ENGINE INJECTION AND EXHAUST-GAS AFTERTREATMENT
DISPOSITIF D'ALIMENTATION EN CARBURANT POUR INJECTION MOTEUR ET POST-TRAITEMENT DES GAZ D'ÉCHAPPEMENT

(30) Priorität: 18.08.2015 DE 102015215685
(43) Veröffentlichungstag der Anmeldung: 27.06.2018
(73) Patentinhaber: Robert Bosch GmbH, 70442 Stuttgart (DE)
(72) Erfinder: SCARFONE, Roberto, 73734 Esslingen (DE)
(86) Internationale Anmeldenummer: PCT/EP2016/064153
(87) Internationale Veröffentlichungsnummer: WO 2017/028996

(56) Entgegenhaltungen:
- WO-A1-2007/093554
- WO-A1-2009/071427

## Beschreibung

Die Erfindung betrifft eine Kraftstoffversorgungseinrichtung, insbesondere eine Kraftstoffversorgungseinrichtung, die dazu ausgebildet ist, eine Abgasstrang-Eindosiervorrichtung und eine Motor-Einspritzvorrichtung eines Kraftfahrzeugs mit Kraftstoff zu versorgen.

Aufgrund der Abgasgesetzgebung weisen Kraftwagen mit Verbrennungsmotoren, insbesondere Dieselmotoren, in der Regel einen Diesel-Partikelfilter (DPF) im Abgasstrang des Verbrennungsmotors auf, der ausgebildet ist, in den Abgasen enthaltenen Partikel, insbesondere Rußpartikel, herauszufiltern.

Von Zeit zu Zeit, insbesondere wenn ein hoher Abgasgegendruck, der von einer hohen Partikelbeladung des Diesel-Partikelfilters verursacht wird, den Abgasausstoß behindert, ist es notwendig, den Diesel-Partikelfilter zu regenerieren. Das Regenerieren erfolgt in der Regel durch Verbrennen der in dem Partikelfilter eingelagerten Partikel. Dazu wird von einer Eindosiervorrichtung, die stromaufwärts des Partikelfilters am Abgasstrang angeordnet ist, Kraftstoff in den Abgasstrang eingespritzt. Die Verbrennung des Kraftstoffs im Abgasstrang, die ggf. von einem Oxidationskatalysator unterstützt wird, erzeugt die hohen Temperaturen, die notwendig sind, um die in dem Partikelfilter eingelagerten Partikel zu verbrennen. Um die Auswirkungen von Druckschwankungen in der Eindosiervorrichtung auf die in den Abgasstrang eingebrachte Kraftstoffmenge gering zu halten, schlägt WO 2014/086518 A1 ein Eindosiervorrichtung mit einer Versorgungseinrichtung und einer Zumesseinheit vor, wobei zwischen der Versorgungseinrichtung und der Zumesseinheit eine variable Drossel angeordnet ist.

Der durch das Vorsehen einer Abgasstrang-Eindosiervorrichtung zusätzlich notwendigen Aufwand kann gering gehalten werden, wenn die Abgasstrang-Eindosiervorrichtung und die Motor-Einspritzvorrichtung, die vorgesehen ist, Kraftstoff in die Verbrennungsräume ("Zylinder") des Verbrennungsmotors einzuspritzen, von einer gemeinsamen Kraftstoffversorgungseinrichtung versorgt werden.

Es ist daher wünschenswert, eine Kraftstoffversorgungseinrichtung zur Verfügung zu stellen, die in der Lage ist, sowohl die Abgasstrang-Eindosiervorrichtung als auch die Motor-Einspritzvorrichtung zuverlässig mit Kraftstoff zu versorgen. Eine solche Einrichtung ist z.B. in der WO 2007/093554 A1 offenbart.

Gemäß einem Ausführungsbeispiel der Erfindung umfasst eine Kraftstoffversorgungseinrichtung, die insbesondere zum Einsatz in einem Kraftfahrzeug mit einem Verbrennungsmotor vorgesehen ist, eine Kraftstoff-Förderpumpe, die ausgebildet ist, Kraftstoff aus einem Tank zu entnehmen und unter erhöhtem Druck durch einen Ausgang auszugeben; einen ersten Fluidanschluss, der zum Anschließen einer Abgasstrang-Eindosiervorrichtung vorgesehen ist, und einem zweiten Fluidanschluss, der zum Anschließen einer Motor-Einspritzvorrichtung vorgesehen ist. Der erste Fluidanschluss ist direkt, bzw. nur über ein Kraftstofffilter, mit dem Ausgang der Kraftstoff-Förderpumpe verbunden, so dass der Fluiddruck am ersten Fluidanschluss, bis auf einen Druckabfall an dem ggf. zwischen der Ausgang der Kraftstoff-Förderpumpe und dem erste Fluidanschluss angeordneten Kraftstofffilter, identisch mit dem Fluiddruck am Ausgang der Kraftstoff-Förderpumpe ist. Zwischen dem Ausgang der Kraftstoff-Förderpumpe und dem zweiten Fluidanschluss ist eine Fluiddrossel angeordnet, so dass der Fluiddruck am zweiten Fluidanschluss geringer als der Fluiddruck am Ausgang der Kraftstoff-Förderpumpe und am ersten Fluidanschluss ist.

In einem erfindungsgemäßen Verfahren zum Betreiben eines Verbrennungsmotors mit einer Kraftstoffversorgungseinrichtung nach einem Ausführungsbeispiel der Erfindung und mit einer Motor-Einspritzvorrichtung, die an den zweiten Fluidanschluss angeschlossen und ausgebildet ist, Kraftstoff in wenigstens einen Verbrennungsraum eines Verbrennungsmotors einzuspritzen, wird die Fördermenge der Kraftstoff-Förderpumpe so eingestellt, dass der Motor-Einspritzvorrichtung eine ausreichende Kraftstoffmenge zur Verfügung gestellt wird. Für einen effizienten Betrieb wird die Fördermenge insbesondere so eingestellt, dass die von der Kraftstoffversorgungseinrichtung zur Verfügung gestellte Kraftstoffmenge nicht wesentlich größer als die von der Motor-Einspritzvorrichtung benötigte Kraftstoffmenge ist.

In einem erfindungsgemäßen Verfahren zum Regenerieren eines Partikelfilters mit einer Kraftstoffversorgungseinrichtung nach einem Ausführungsbeispiel der Erfindung und einer Abgasstrang-Eindosiervorrichtung, die an dem ersten Fluidanschluss angeschlossen und ausgebildet ist, von der Kraftstoffversorgungseinrichtung zur Verfügung gestellten Kraftstoff stromaufwärts des Partikelfilters in den Abgasstrang des Verbrennungsmotors einzuspritzen, wird die Förderleistung der Kraftstoff-Förderpumpe gegenüber dem Normalbetrieb so erhöht, dass am Eingang der Abgasstrang-Eindosiervorrichtung die erforderlichen Kraftstoffmenge zur Verfügung gestellt wird. Durch Betreiben der Abgasstrang-Eindosiervorrichtung wird die gewünschte bzw. benötigte Menge an Kraftstoff in den Abgasstrang eingespritzt.

Da der für einen einwandfreien Betrieb an der Abgasstrang-Eindosiervorrichtung erforderliche Druck in der Regel höher ist, als der Druck, der für einen einwandfreien Betrieb an der Motor-Einspritzvorrichtung anliegen muss, wird durch eine vorübergehende Druckerhöhung während des Regenerationsvorgangs eine sichere Regeneration des Diesel-Partikelfilters gewährleistet. Die Druckerhöhung wird durch eine Erhöhung der Fördermenge der Kraftstoff-Förderpumpe realisiert. Dabei kann die Fördermenge der Kraftstoff-Förderpumpe insbesondere auf ihren maximal möglichen Wert erhöht werden. Die Fluiddrossel ermöglicht es, den Druck, der an der Abgasstrang-Eindosiervorrichtung anliegt, über den Druck, der an der Motor-Einspritzvorrichtung anliegt, hinaus zu erhöhen.

Indem der Druck an der Abgasstrang-Eindosiervorrichtung nach dem Abschluss des Regenerationsvorgangs durch Reduzieren der Fördermenge der Kraftstoff-Förderpumpe wieder abgesenkt wird, kann ein effizienter Betrieb des Verbrennungsmotors realisiert werden.

In einer Ausführungsform ist am zweiten Fluidanschluss der Eingang eines Überflussventils angeschlossen. Der Ausgang des Überflussventils ist durch eine Überflussleitung mit dem Tank verbunden. So kann durch Öffnen des Überflussventils überschüssiger Kraftstoff abgeführt und insbesondere in den Tank zurückgeführt werden. Das Überflussventil wirkt dabei als Druckregelventil und ermöglicht es, den Druck, der am Eingang der Motor-Einspritzvorrichtung anliegt, auf einen gewünschten Wert einzustellen. So kann insbesondere verhindert werden, dass der Druck, der am Eingang der Motor-Einspritzvorrichtung anliegt, zu stark um einen vorgegebenen Wert, der für die einwandfreie Funktion der Motor-Einspritzvorrichtung notwendig ist, schwankt oder einen vorgegebenen Grenzwert überschreitet.

Das Überflussventil umfasst insbesondere ein Feder-Kolben Element, das derart ausgebildet ist, dass das Überflussventil an einen vorgegebenen Betriebspunkt eine steile Kennlinie aufweist. Am Ausgang des Überflussventils ist insbesondere ein Überflussventil-Drosselelement vorgesehen. Durch den speziellen Aufbau des Überflussventils mit einem Feder-Kolben Element und einem Drosselelement, das stromabwärts des Überflussventils angeordnet ist, kann der Druck in der Überflussleitung reguliert und/oder begrenzt werden.

In einer Ausführungsform ist das Überflussventil eingangsseitig mit einem Überflussventil-Filterelement ausgebildet. Durch ein Filterelement, das stromaufwärts des Überflussventils angeordnet ist, kann ein Verstopfen des Überflussventils durch Fremdkörper und/oder Schmutzstoffe zuverlässig verhindert werden.

In einer Ausführungsform ist zwischen dem Ausgang der Kraftstoff-Förderpumpe und dem ersten Fluidanschluss und/oder zwischen dem Ausgang der Kraftstoff-Förderpumpe und der Fluiddrossel ein Kraftstofffilter vorgesehen, um ein Verstopfen oder eine Beschädigung der Abgasstrang-Eindosiervorrichtung oder der Motor-Einspritzvorrichtung durch Fremdkörper und/oder Schmutzstoffe zu verhindern.

Das Filterelement, das Überflussventil und das Überflussventil-Drosselelement können als Bestandteile der Kraftstoffversorgungseinrichtung oder innerhalb der Motor-Einspritzvorrichtung ausgebildet sein.

Erfindungsgemäß ist die Kraftstoff-Förderpumpe als regelbare Pumpe, insbesondere als stufenlos und/oder elektronisch regelbare Pumpe ausgebildet, so dass die geförderte Kraftstoffmenge und damit auch der Fluiddruck am Ausgang der Pumpe einfach auf einen gewünschten Wert eingestellt werden können.

### Kurze Beschreibung der Figuren:

Ein Ausführungsbeispiel der Erfindung wird im Folgenden anhand der beigefügten Figuren näher erläutert. Dabei zeigt:
Figur 1 eine schematische Darstellung eines Systems zum Einspritzen von Kraftstoff in einen Abgasstrang eines Verbrennungsmotors;
Figur 2 eine schematische Darstellung einer Kraftstoffversorgungseinrichtung gemäß einem Ausführungsbeispiel der Erfindung; und
Figur 3 schematisch ein Beispiel für eine Kennlinie eines Überflussventils, wie es in einer Kraftstoffversorgungseinrichtung gemäß einem Ausführungsbeispiel der Erfindung verwendet wird.

### Figurenbeschreibung:

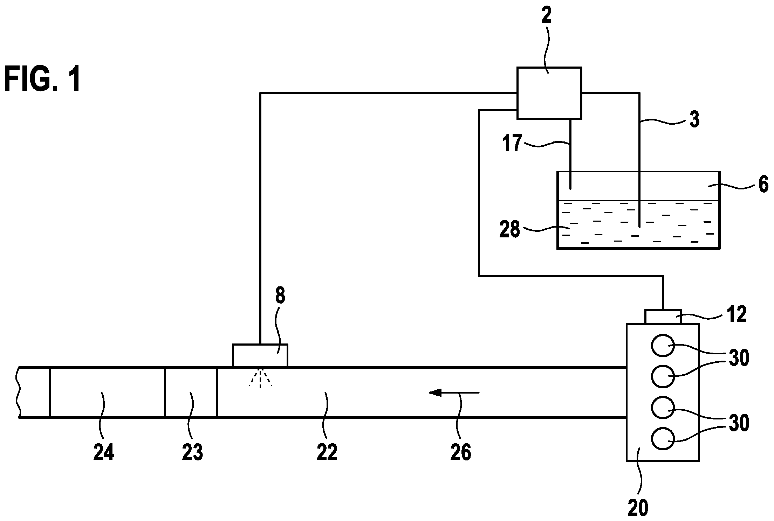

Figur 1 zeigt ein System zum Einspritzen von Kraftstoff in einen Abgasstrang 22 eines Verbrennungsmotors 20 in einer schematischen Darstellung.

Zwischen dem Verbrennungsmotor 20 und einem stromabwärts des Verbrennungsmotors 20 angeordneten Partikelfilter 24 ist eine Abgasstrang-Eindosiervorrichtung 8 am Abgasstrang 22 angebracht. Durch eine Kraftstoffversorgungseinrichtung 2 wird Kraftstoff 28 über eine Kraftstoffleitung 3 aus einem Kraftstofftank 6 entnommen und der Abgasstrang-Eindosiervorrichtung 8 zugeführt.

Die Abgasstrang-Eindosiervorrichtung 8 ist ausgebildet, eine gewünschte Kraftstoffmenge in den Abgasstrang 22 einzuspritzen. Im Abgasstrang 22 vermischt sich der eingespritzte Kraftstoff 28 mit durch den Abgasstrang 22 strömenden Abgasen 26 und entzündet sich, insbesondere an einem zwischen der Abgasstrang-Eindosiervorrichtung 8 und dem Partikelfilter 24 angeordneten Oxidationskatalysator 23.

Durch die bei der Verbrennung des eingespritzten Kraftstoffs 28 im Abgasstrang 22 entstehenden hohen Temperaturen werden Partikel, insbesondere Rußpartikel, die sich zuvor im Partikelfilter 24 angesammelt haben, verbrannt, und der Partikelfilter 24 wird regeneriert.

Die Kraftstoffversorgungseinrichtung 2 versorgt auch eine Motor-Einspritzvorrichtung 12 mit Kraftstoff 28. Der Kraftstoff 28 wird von der Motor-Einspritzvorrichtung 12 in die Verbrennungsräume ("Zylinder") 30 des Motors 20 eingespritzt.

Die Kraftstoffversorgungseinrichtung 2 umfasst auch eine Kraftstoffrückführleitung 17, die es ermöglicht, überschüssigen Kraftstoff 28 in den Kraftstofftank 6 zurückzuführen.

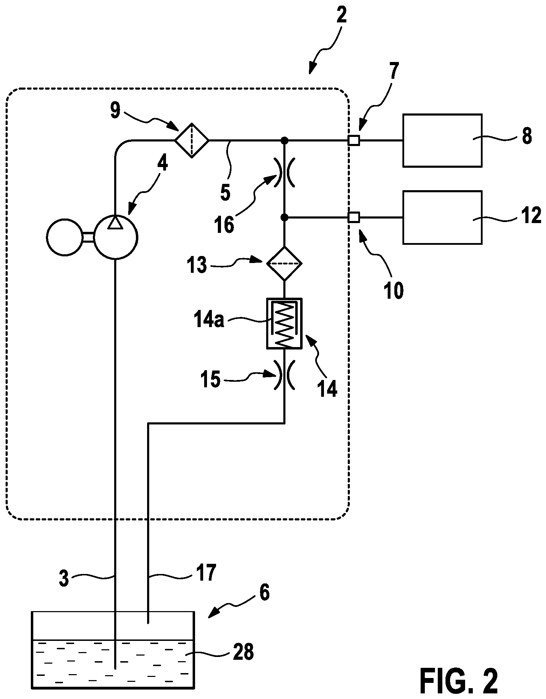

Aufbau und Funktion der Kraftstoffversorgungseinrichtung 2 werden im Folgenden anhand der in der Figur 2 gezeigten vergrößerten Darstellung näher erläutert.

Die Kraftstoffversorgungseinrichtung 2 umfasst eine Kraftstoff-Förderpumpe 4, die ausgebildet ist, durch die Kraftstoffleitung 3 Kraftstoff 28 aus dem Kraftstofftank 6-zu entnehmen und durch eine Druckleitung 5, in der ein Kraftstofffilter 9 angeordnet ist, unter erhöhtem Druck einem ersten Fluidanschluss 7 zuzuführen. Der erste Fluidanschluss 7 ist zum Anschließen der Abgasstrang-Eindosiervorrichtung 8 vorgesehen.

Über einer Fluiddrossel 16 ist die Druckleitung 5 auch mit einem zweiten Fluidanschluss 10 verbunden, der zum Anschließen einer Motor-Einspritzvorrichtung 12 vorgesehen ist.

Stromabwärts, d.h. auf der von der Druckleitung 5 abgewandten Seite der Fluiddrossel 16, befindet sich ein Überflussventil 14, das ausgangsseitig mit der Kraftstoffrückführleitung 17 verbunden ist. Durch Öffnen des Überflussventils 14 kann überschüssiger Kraftstoff 28 in den Kraftstofftank 6 zurückgeführt werden.

Das Überflussventil 14 ist eingangsseitig mit einem Überflussventil-Filterelement 13 und/oder ausgangsseitig mit einem Überflussventil-Drosselelement 15 ausgebildet. Durch ein Filterelement 13, das stromaufwärts des Überflussventils 14 angeordnet ist, kann ein Verstopfen des Überflussventils 14 durch Fremdkörper und/oder Schmutzstoffe zuverlässig verhindert werden.

Das Überflussventil 14 umfasst insbesondere ein Feder-Kolben Element 14a, das derart ausgebildet ist, dass das Überflussventil 14 an einen vorgegebenen Betriebspunkt eine steile Kennlinie aufweist. Durch den Aufbau des Überflussventils 14 mit einem Feder-Kolben Element 14a und einem Überflussventil-Drosselelement 15, das stromabwärts des Überflussventils 14 angeordnet ist, kann der Druck, der am zweiten Fluidanschluss 10 anliegt, reguliert und/oder begrenzt werden.

Das Filterelement 13, das Überflussventil 14 und das Überflussventil-Drosselelement 15 sind in der Figur 2 als Bestandteil der Kraftstoffversorgungseinrichtung 2 dargestellt. Alternativ können das Filterelement 13, das Überflussventil 14 und das Überflussventil-Drosselelement 15 auch innerhalb der Motor-Einspritzvorrichtung 12 ausgebildet sein.

Im Normalbetrieb des Verbrennungsmotors 20, wenn keine Regeneration des Partikelfilters 24 stattfindet, ist die am ersten Fluidanschluss 7 angeschlossene Abgasstrang-Eindosiervorrichtung 8 deaktiviert. Im Normalbetrieb wird die Fördermenge der Kraftstoff-Förderpumpe 4 so eingestellt, dass die zur Verfügung gestellte Kraftstoffmenge ausreicht, um durch das Zusammenwirken des Überflussventils 14 und des Überflussventil-Drosselelements 15 am Eingang der Motor-Einspritzvorrichtung 12, die am zweiten Fluidanschluss 10 angeschlossen ist, den gewünschten bzw. benötigten Kraftstoffdruck einzustellen.

Für einen effektiven Betrieb des Verbrennungsmotors 20 und der Kraftstoffversorgungseinrichtung 2 wird die Fördermenge der Kraftstoff-Förderpumpe 4 insbesondere so eingestellt, dass die von der Kraftstoffversorgungseinrichtung 2 am zweiten Fluidanschluss 10 zur Verfügung gestellte Kraftstoffmenge nicht wesentlich größer als die Menge an Kraftstoff 28 ist, die von der Motor-Einspritzvorrichtung 12 in die Verbrennungsräume 30 des Motors 20 eingespritzt wird.

Um am Eingang der Motor-Einspritzvorrichtung 12 einen konstanten Druck aufrecht zu erhalten und übermäßige Druckschwankungen zu vermeiden, muss die am zweiten Fluidanschluss 10 zur Verfügung gestellte Kraftstoffmenge etwas größer als die Kraftstoffmenge sein, die in die Verbrennungsräume 30 des Motors 20 eingespritzt wird. Ein Teil des Kraftstoffs wird auch zum Kühlen der Motor-Einspritzvorrichtung 12 benötigt. Überschüssiger Kraftstoff 28, der nicht von der Motor-Einspritzvorrichtung 12 benötigt wird, wird durch das geöffnete Überflussventil 14 und die Kraftstoffrückführleitung 17 in den Kraftstofftank 6 zurückgeführt.

Um den Partikelfilter 24 zu regenerieren (Regenerationsbetrieb), wird die Förderleistung der Kraftstoff-Förderpumpe 4 erhöht, und die an dem ersten Fluidanschluss 7 angeschlossene Abgasstrang-Eindosiervorrichtung 8 wird aktiviert, um die gewünschte / benötigte Menge an Kraftstoff 28 in den Abgasstrang 22 einzuspritzen.

Die Fluiddrossel 16 ermöglicht es, am Eingang der am ersten Fluidanschluss 7 angeschlossenen Abgasstrang-Eindosiervorrichtung 8 einen höheren Druck als an der am zweiten Fluidanschluss 10 angeschlossenen Motor-Einspritzvorrichtung 12 einzustellen. Die Abgasstrang-Eindosiervorrichtung 8 kann auf diese Weise zuverlässig betrieben werden, ohne dass die Notwendigkeit besteht, die Motor-Einspritzvorrichtung 12 mit einem überhöhten Kraftstoffdruck zu betreiben. Der am ersten Fluidanschluss 7 anliegende Kraftstoffdruck kann beispielsweise 4,4 bis 8,9 bar betragen, und der am zweiten Fluidanschluss anliegende Kraftstoffdruck kann beispielsweise zwischen 3,5 und 4,0 bar, insbesondere 3,8 bar, betragen.

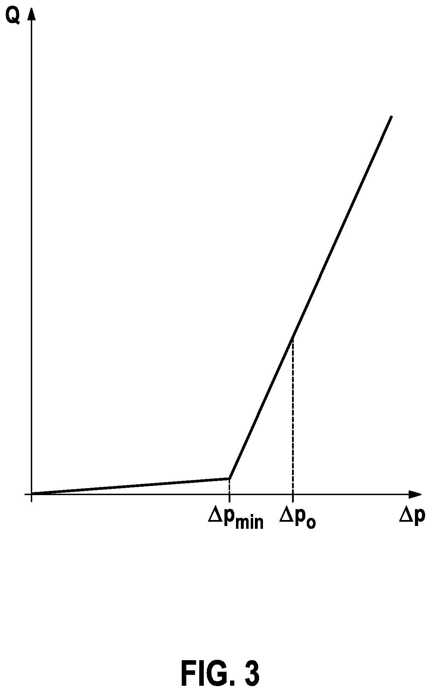

Figur 3 zeigt in einer schematischen Darstellung eine Kennlinie des Überflussventils 14.

Auf der horizontalen Achse (x-Achse) ist dabei der Druckunterschied Δp zwischen dem Eingang und dem Ausgang des Überflussventils 14 aufgetragen. Auf der vertikalen Achse (y-Achse) ist die Durchflussmenge ΔQ durch das Überflussventil 14 aufgetragen.

Das Überflussventil 14 weist für kleine Druckunterschiede Δp < Δpₘᵢₙ eine sehr flache Kennlinie auf, so dass das Überflussventil 14 in diesem Bereich praktisch geschlossen ist. Im Bereich Δp > Δpₘᵢₙ weist das Überflussventil 14 eine sehr steile Kennlinie von beispielsweise 400 l/h/bar auf. Der Betriebspunkt Δp₀ der Motor-Einspritzvorrichtung 12, der beispielsweise zwischen 3,5 und 4,0 bar, insbesondere bei 3,8 bar liegt, befindet sich im steilen Bereich der Kennlinie. Auf diese Weise werden Druckschwankungen von dem Überflussventil 14 abgefangen, und am Eingang der Motor-Einspritzvorrichtung 12, die am zweiten Fluidanschluss 10 der Kraftstoffversorgungseinrichtung 2 angeschlossen ist, wird ein möglichst konstanter Druck um den Betriebspunkt Δp₀ bereitgestellt.

Das Überflussventil 14 ermöglicht, dass der Druck am zweiten Fluidanschluss 10 bzw. an der Motor-Einspritzvorrichtung 12 nahezu konstant um einen vorgegebenen Zielwert (Betriebspunkt Δp₀), der eine einwandfreie Funktion der Motor-Einspritzvorrichtung 12 erlaubt, bleibt.

Die Fluiddrossel 16 ermöglicht es, am ersten Fluidanschluss 7, bzw. an der Abgasstrang-Eindosiervorrichtung 8, Kraftstoff unter erhöhtem Druck zur Verfügung zu stellen, ohne dass der Druck am zweiten Fluidanschluss 10 den vorgegebenen Zielwert überschreitet.

Die Erfindung ermöglicht es somit, eine Abgasstrang-Eindosiervorrichtung 8 und eine Motor-Einspritzvorrichtung 12 zuverlässig an einer gemeinsamen Kraftstoffversorgungseinrichtung 2 zu betreiben. Auf eine zusätzliche Kraftstoffversorgungseinrichtung 2 zur Versorgung der Abgasstrang-Eindosiervorrichtung 8 kann daher verzichtet werden. Auf diese Weise können der Herstellungsaufwand und die Herstellungskosten deutlich reduziert werden.

## Patentansprüche

1. Kraftstoffversorgungseinrichtung (2), insbesondere zum Einsatz in einem Kraftfahrzeug mit einem Verbrennungsmotor (20), mit
einer regelbaren Kraftstoff-Förderpumpe (4), die ausgebildet ist, Kraftstoff (28) aus einem Kraftstofftank (6) zu entnehmen und unter erhöhtem Druck durch einen Ausgang auszugeben;
einem ersten Fluidanschluss (7), der zum Anschließen einer Abgasstrang-Eindosiervorrichtung (8) vorgesehen ist, und
einem zweiten Fluidanschluss (10), der zum Anschließen einer Motor-Einspritzvorrichtung (12) vorgesehen ist;
wobei der erste Fluidanschluss (7) direkt oder über einen Kraftstofffilter (9) mit dem Ausgang der Kraftstoff-Förderpumpe (4) verbunden ist; und
wobei zwischen dem Ausgang der Kraftstoff-Förderpumpe (4) und dem zweiten Fluidanschluss (10) eine Fluiddrossel (16) angeordnet ist wobei die Kraftstoffversorgungseinrichtung (2) ausgebildet ist,
in einem Normalbetrieb die Fördermenge der regelbaren Kraftstoff-Förderpumpe (4) so einzustellen, dass die zur Verfügung gestellte Kraftstoffmenge ausreicht, am zweiten Fluidanschluss (10) die von der Motor-Einspritzvorrichtung (12) benötigte Fluidmenge zur Verfügung zu stellen; und
in einem Regenerationsbetrieb die Förderleistung der Kraftstoff-Förderpumpe (4) zu erhöhen und die am ersten Fluidanschluss (7) angeschlossene Abgasstrang-Eindosiervorrichtung (8) zu aktivieren, um Kraftstoff in den Abgasstrang (22) einzuspritzen.

2. Kraftstoffversorgungseinrichtung (2) nach Anspruch 1, wobei an dem zweiten Fluidanschluss (10) der Eingang eines Überflussventils (14) angeschlossen ist, das es ermöglicht, überschüssigen Kraftstoff in den Kraftstofftank (6) zurückzuführen.

3. Kraftstoffversorgungseinrichtung (2) nach Anspruch 2, wobei das Überflussventil (14) eingangsseitig mit einem Überflussventil-Filterelement (13) und/oder ausgangsseitig mit einem Überflussventil-Drosselelement (15) ausgebildet ist.

4. Kraftstoffversorgungseinrichtung (2) nach einem der vorangehenden Ansprüche, wobei zwischen dem Ausgang der Kraftstoff-Förderpumpe (4) und dem ersten Fluidanschluss (7) und/oder zwischen dem Ausgang der Kraftstoff-Förderpumpe (4) und der Fluiddrossel (16) ein Kraftstofffilter (9) vorgesehen ist.

5. Kraftstoffversorgungseinrichtung (2) nach einem der vorangehenden Ansprüche, wobei die Kraftstoff-Förderpumpe (4) als stufenlos und/oder elektronisch regelbare Pumpe ausgebildet ist.

6. Verfahren zum Regenerieren eines Partikelfilters (24), der in einem Abgasstrang (22) eines Verbrennungsmotors (20) angeordnet ist, mit
einer Kraftstoffversorgungseinrichtung (2) nach Anspruch 1, und
einer Abgasstrang-Eindosiervorrichtung (8), die an dem ersten Fluidanschluss (7) angeschlossen und ausgebildet ist, von der Kraftstoffversorgungseinrichtung (2) zur Verfügung gestellten Kraftstoff (28) stromaufwärts des Partikelfilters (24) in der Abgasstrang (22) des Verbrennungsmotors (20) einzuspritzen, wobei das Verfahren umfasst:
in einem Normalbetrieb die Fördermenge der regelbaren Kraftstoff-Förderpumpe (4) so einzustellen, dass die zur Verfügung gestellte Kraftstoffmenge ausreicht, am zweiten Fluidanschluss (10) die von der Motor-Einspritzvorrichtung (12) benötigte Fluidmenge zur Verfügung zu stellen,
und in einem Regenerationsbetrieb
(a) die Förderleistung der Kraftstoff-Förderpumpe (4) zu erhöhen; und
(b) durch Betreiben der Abgasstrang-Eindosiervorrichtung (8) eine gewünschte Menge an Kraftstoff (28) in den Abgasstrang (22) einzuspritzen.

7. Verfahren nach Anspruch 6, wobei das Verfahren umfasst, die Kraftstoff-Förderpumpe (4) mit ihrer maximalen Leistung zu betreiben.

8. Verfahren zum Betreiben eines Verbrennungsmotors (20) mit
einer Kraftstoffversorgungseinrichtung (2) nach Anspruch 1, und
einer Motor-Einspritzvorrichtung (12), die an dem zweiten Fluidanschluss (10) angeschlossen und ausgebildet ist, Kraftstoff (28) in wenigstens einen Verbrennungsraum (30) eines Verbrennungsmotors (20) einzuspritzen,
wobei das Verfahren umfasst, die Fördermenge der Kraftstoff-Förderpumpe (4) so einzustellen, dass der Motor-Einspritzvorrichtung (12) eine ausreichende Kraftstoffmenge zur Verfügung gestellt wird.

9. Verfahren nach Anspruch 8, wobei das Verfahren umfasst, die Fördermenge der Kraftstoff-Förderpumpe (4) so einzustellen, dass der Motor-Einspritzvorrichtung (12) eine Kraftstoffmenge zur Verfügung gestellt wird, die nicht wesentlich größer als die von der Motor-Einspritzvorrichtung (12) benötigte Kraftstoffmenge ist.

10. Verfahren nach Anspruch 8 oder 9, wobei das Verfahren umfasst, überschüssigen Kraftstoff (28) durch Öffnen eines stromaufwärts der Motor-Einspritzvorrichtung (12) angeordneten Überflussventils (14) abzuführen.

## Claims

1. Fuel supply device (2), in particular for use in a motor vehicle having an internal combustion engine (20), having
a controllable fuel delivery pump (4), which is designed to extract fuel (28) from a fuel tank (6) and to output said fuel at elevated pressure through an outlet;
a first fluid port (7), which is provided for the connection of an exhaust-tract dosing apparatus (8), and
a second fluid port (10), which is provided for the connection of an engine injection apparatus (12);
wherein the first fluid port (7) is connected directly or via a fuel filter (9) to the outlet of the fuel delivery pump (4); and
wherein a fluid throttle (16) is arranged between the outlet of the fuel delivery pump (4) and the second fluid port (10),
wherein the fuel supply device (2) is designed to, during normal operation, set the delivery quantity of the controllable fuel delivery pump (4) such that the provided fuel quantity is sufficient to provide, at the second fluid port (10), the fuel quantity required by the engine injection apparatus (12); and
during regeneration operation, increase the delivery power of the fuel delivery pump (4) and activate the exhaust-tract dosing apparatus (8) connected to the first fluid port (7), in order to inject fuel into the exhaust tract (22).

2. Fuel supply device (2) according to Claim 1, wherein the inlet of an overflow valve (14) is connected to the second fluid port (10), which overflow valve allows excess fuel to be returned into the fuel tank (6).

3. Fuel supply device (2) according to Claim 2, wherein the overflow valve (14) is formed, at the inlet side, with an overflow valve filter element (13) and/or, at the outlet side, with an overflow valve throttle element (15).

4. Fuel supply device (2) according to one of the preceding claims, wherein a fuel filter (9) is provided between the outlet of the fuel delivery pump (4) and the first fluid port (7) and/or between the outlet of the fuel delivery pump (4) and the fluid throttle (16).

5. Fuel supply device (2) according to one of the preceding claims, wherein the fuel delivery pump (4) is designed as a pump which is controllable in continuously variable and/or electronic fashion.

6. Method for regenerating a particle filter (24) which is arranged in an exhaust tract (22) of an internal combustion engine (20), having
a fuel supply device (2) according to Claim 1, and
an exhaust-tract dosing apparatus (8) which is connected to the first fluid port (7) and which is designed to inject fuel (28), which is provided by the fuel supply device (2), upstream of the particle filter (24) in the exhaust tract (22) of the internal combustion engine (20), wherein the method comprises:
during normal operation, setting the delivery quantity of the controllable fuel delivery pump (4) such that the provided fuel quantity is sufficient to provide, at the second fluid port (10), the fuel quantity required by the engine injection apparatus (12),
and during regeneration operation
(a) increasing the delivery power of the fuel delivery pump (4); and
(b) injecting a desired quantity of fuel (28) into the exhaust tract (22) by operating the exhaust-tract dosing apparatus (8).

7. Method according to Claim 6, wherein the method comprises operating the fuel delivery pump (4) with its maximum power.

8. Method for operating an internal combustion engine (20) having
a fuel supply device (2) according to Claim 1, and an engine injection apparatus (12) which is connected to the second fluid port (10) and which is designed to inject fuel (28) into at least one combustion chamber (30) of an internal combustion engine (20),
wherein the method comprises setting the delivery quantity of the fuel delivery pump (4) such that the engine injection apparatus (12) is provided with a sufficient fuel quantity.

9. Method according to Claim 8, wherein the method comprises setting the delivery quantity of the fuel delivery pump (4) such that the engine injection apparatus (12) is provided with a fuel quantity which is not significantly greater than the fuel quantity required by the engine injection apparatus (12).

10. Method according to Claim 8 or 9, wherein the method comprises discharging excess fuel (28) by opening an overflow valve (14) arranged upstream of the engine injection apparatus (12).

## Revendications

1. Dispositif d'alimentation en carburant (2), destiné en particulier à être utilisé dans un véhicule automobile comprenant un moteur à combustion interne (20), ledit dispositif comprenant
une pompe de distribution de carburant réglable (4) qui est conçue pour retirer du carburant (28) d'un réservoir de carburant (6) et pour le délivrer sous une pression accrue par une sortie ;
un premier raccord de fluide (7) qui est prévu pour raccorder un dispositif de dosage de ligne de gaz d'échappement (8), et
un deuxième raccord de fluide (10) qui est prévu pour raccorder un dispositif d'injection (12) du moteur ;
le premier raccord de fluide (7) étant raccordé directement ou via un filtre à carburant (9) à la sortie de la pompe de distribution de carburant (4) ; et
un étranglement de fluide (16) étant disposé entre la sortie de la pompe de distribution de carburant (4) et le deuxième raccord de fluide (10),
le dispositif d'alimentation en carburant (2) étant conçu pour
régler le débit d'alimentation de la pompe de distribution de carburant réglable (4) en fonctionnement normal de sorte que la quantité de carburant fournie soit suffisante pour délivrer au niveau du deuxième raccord de fluide (10) la quantité de fluide nécessaire au dispositif d'injection (12) du moteur ; et
augmenter en fonctionnement de régénération le débit d'alimentation de la pompe de distribution de carburant (4) et activer le dispositif de dosage de ligne de gaz d'échappement (8) connecté au premier raccord de fluide (7) pour injecter du carburant dans la ligne de gaz d'échappement (22).

2. Dispositif d'alimentation en carburant (2) selon la revendication 1, **caractérisé en ce que** l'entrée d'une vanne de trop-plein (14) est raccordée au deuxième raccord de fluide (10), ce qui permet de ramener un excès de carburant dans le réservoir de carburant (6).

3. Dispositif d'alimentation en carburant (2) selon la revendication 2, la vanne de trop-plein (14) étant conçue du côté entrée avec un élément filtrant (13) et/ou du côté sortie avec un élément d'étranglement (15) .

4. Dispositif d'alimentation en carburant (2) selon l'une des revendications précédentes, un filtre à carburant (9) étant prévu entre la sortie de la pompe de distribution de carburant (4) et le premier raccord de fluide (7) et/ou entre la sortie de la pompe de distribution de carburant (4) et l'étrangleur de fluide (16) .

5. Dispositif d'alimentation en carburant (2) selon l'une des revendications précédentes, la pompe de distribution de carburant (4) étant conçue comme une pompe réglable en continue et/ou électroniquement.

6. Procédé de régénération d'un filtre à particules (24), qui est disposé dans une ligne de gaz d'échappement (22) d'un moteur à combustion interne (20), au moyen
d'un dispositif d'alimentation en carburant (2) selon la revendication 1, et
d'un dispositif de dosage de ligne de gaz d'échappement (8) qui est raccordé au premier raccord de fluide (7) et qui est conçu pour injecter du carburant (28), fourni par le dispositif d'alimentation en carburant (2), en amont du filtre à particules (24) dans la ligne de gaz d'échappement (22) du moteur à combustion interne (20), le procédé comprenant les étapes suivantes :
régler en fonctionnement normal le débit d'alimentation de la pompe de distribution de carburant réglable (4) de sorte que la quantité de carburant fournie soit suffisante pour fournir la quantité de fluide, nécessaire au dispositif d'injection (12) du moteur, au niveau du deuxième raccord de fluide (10),
et en fonctionnement de régénération
(a) augmenter le débit d'alimentation de la pompe de distribution de carburant (4) ; et
(b) injecter une quantité désirée de carburant (28) dans la ligne de gaz d'échappement (22) par actionnement du dispositif de dosage de ligne de gaz d'échappement (8).

7. Procédé selon la revendication 6, le procédé comprenant le fonctionnement de la pompe de distribution de carburant (4) à sa puissance maximale.

8. Procédé de fonctionnement d'un moteur à combustion interne (20) au moyen
d'un dispositif d'alimentation en carburant (2) selon la revendication 1 et
d'un dispositif d'injection (12) du moteur qui est raccordé au deuxième raccord de fluide (10) et qui est conçu pour injecter du carburant (28) dans au moins une chambre de combustion (30) d'un moteur à combustion interne (20),
le procédé comprenant le réglage du débit d'alimentation de la pompe de distribution de carburant (4) pour fournir une quantité suffisante de carburant au disposition d'injection (12) du moteur.

9. Procédé selon la revendication 8, le procédé comprenant le réglage du débit d'alimentation de la pompe de distribution de carburant (4) pour fournir au dispositif d'injection (12) du moteur une quantité de carburant qui n'est pas sensiblement supérieure à la quantité de carburant nécessaire au dispositif d'injection (12) du moteur.

10. Procédé selon la revendication 8 ou 9, le procédé comprenant l'évacuation de l'excès de carburant (28) par ouverture d'une vanne de trop-plein (14) située en amont du dispositif d'injection (12) du moteur.
